# EUROPÄISCHE PATENTSCHRIFT

(11) **EP 1 476 495 B1**
(45) Veröffentlichungstag und Bekanntmachung des Hinweises auf die Patenterteilung: **07.03.2007**
(21) Anmeldenummer: 03737291.9
(22) Anmeldetag: 30.01.2003
(51) Int. Cl.: C08J 3/00, D06M 15/00

(54) **HYDROPHILES COMPOSITMATERIAL**
HYDROPHILIC COMPOSITE MATERIAL
MATERIAU COMPOSITE HYDROPHILE

(30) Priorität: 08.02.2002 DE 10205442
(43) Veröffentlichungstag der Anmeldung: 17.11.2004
(73) Patentinhaber: BASF Aktiengesellschaft, 67056 Ludwigshafen (DE)
(72) Erfinder: KELLER, Harald, 67069 Ludwigshafen (DE); JAHNS, Ekkehard, 69469 Weinheim (DE); FRECHEN, Thomas, 69123 Heidelberg (DE); SCHREPP, Wolfgang, 69118 Heidelberg (DE)
(86) Internationale Anmeldenummer: PCT/EP2003/000928
(87) Internationale Veröffentlichungsnummer: WO 2003/066710

(56) Entgegenhaltungen:
- EP-A- 0 459 707
- WO-A-98/04915
- DE-A- 19 952 383
- US-A- 3 532 132
- US-A- 4 006 069
- US-A- 4 732 887

## Beschreibung

Die vorliegende Erfindung betrifft ein Verfahren zur hydrophilen dusrüstung von Oberflächen unter Verwendung von hydrophilen Compositmaterialien, enthaltend die Komponenten A, B sowie optional C, wobei
A ein mit Wasser gut quellbarer Stoff ist,
B ein partikulärer Stoff mit einem Partikeldurchmesser von 0,001 bis 500 µm ist; der eine poröse Struktur bildet, in dessen Poren sich A befindet, wobei des Porendurchmesser 0,001 bis 500 µm und die Porentiefe 0,001 bis 500 µm beträgen, und
C ein Bindemittel ist, wobei man das Compositmaterial in flüssiger Formulierung auf die betreffenden Oberflächen aufbringt.

Ablagerungen und Anbackungen in Apparaten und Apparateteilen für den Anlagenbau bedeuten ein ernsthaftes Problem in der Industrie, insbesondere in der chemischen Industrie. Besonders betroffen sind dabei Apparate-, Behälter- und Reaktorwandungen, Kesselwandungen, Austragsvorrichtungen, Armaturen, Pumpen, Filter, Verdichter, Zentrifugen, Kolonnen, Trockner, Fliehkraftabscheider, Wäscher, Zerkleinerungsmaschinen, Einbauten, Füllkörper, Wärmetauscher, Verdampfer, Kondensatoren, Düsen, Zerstäuber, Sprühtrockner, Kristallisatoren, Abfüllanlagen und Mischorgane. Diese Ablagerungen werden auch als Beläge oder als Fouling bezeichnet.

Dabei können die Beläge auf vielfältige Art schädlich oder hindernd für den Prozess wirken und zur Notwendigkeit führen, entsprechende Reaktoren oder Verarbeitungsmaschinen wiederholt abzuschalten und zu reinigen.

Mit Belägen verkrustete Messeinrichtungen können zu fehlerhaften und irreführenden Ergebnissen führen, durch die Bedienungsfehler auftreten können.

Auch bei anderen Anwendungen sind Beläge nachteilig. Nach dem Benetzen und Verdunsten hinterlässt Wasser Rückstände auf Oberflächen, z.B. Regenwasser auf Fensterscheiben, Kraftfahrzeugen, Verkehrsschildern oder Reklametafeln. Strömende Flüssigkeiten verursachen durch die Benetzung Reibung an den angeströmten Oberflächen. Dies führt beispielsweise bei Schiffen, aber auch bei Flüssigkeiten, die durch Rohrleitungen strömen, zu Reibungsverlusten.

Durch das Benetzen können Flüssigkeiten z.B. Emulsionen, Suspensionen, Polymerdispersionen Beläge und Ablagerungen im Inneren von verfahrenstechnischen Apparaturen, beispielsweise Rohre, Kessel, Tanks, Reaktoren, Wärmetauschern, Verdampfern, Kondensato-ren, Pumpen, Düsen, Zerstäubern, Sprühtrockern, Kristallisatoren oder Abfüllanlagen sowie Laborgeräten verursachen.

Elektrotechnische Vorrichtungen und Bauteile in bewitterten und in nicht bewitterten, aber mit der Umgebungsluft in Verbindung stehenden Bereichen, verschmutzen an ihren Oberflächen. Durch die Verschmutzung selbst und besonders durch Anfeuchtung der Verschmutzung z.B. durch Regen, Nebel oder Luftfeuchte werden die Oberflächen in gewissem Maße elektrisch leitend, wodurch Kriechströme entstehen, die die Funktion der Bauteile beeinträchtigen können. Weiter kommt es z.B. bei hochspannungsführenden Freileitungen und Spannungsumformungsvorrichtungen zu erheblichen Energieverlusten auf Grund der Verschmutzungen der Isolatoren. Weiter sind die Verschmutzungen oft Ursache von Korrosion der Bauvorrichtungen und das Substrat für zusätzliche biologische Belastungen durch z.B. Mikroorganismen, Algen, Flechten, Moose oder Muscheln.

Durch unvollständige Benetzung (Tropfenbildung) trocknen Oberflächen dort, wo die Tropfen sitzen, nur sehr langsam. Dies begünstig das Wachsen unerwünschter Lebewesen, beispielsweise von Mikroorganismen, Biofilmen, Algen, Flechten, Moosen oder Muscheln auf Oberflächen wie beispielsweise Wänden, Dächern, Fassaden, Duschkabinen, Schiffen oder Wärmetauschern.

Durch Benetzung bleiben Flüssigkeiten und Flüssigkeit enthaltende Stoffe wie beispielsweise Mich, Honig, Joghurt oder Zahnpasta teilweise an der inneren Oberfläche der Verpackungsmaterialien hängen. Dadurch kann ein Teil des Verpackungsgutes nicht genutzt werden, wenn man es nicht aufwändig reinigen will. Ferner ist das Recycling von Verpackungsmaterialien wegen Verunreinigung mit dem Verpackungsgut schwierig. Schließlich ist das Verwesen dieser leichtverderblichen Reste auch ein hygienisches Problem und führt insbesondere im Sommer zu unangenehmen Gerüchen in der Nähe von Mülltonnen.

Wenn feste Oberflächen mit Partikeln in Kontakt kommen, findet Adhäsion statt. Die Adhäsion von Partikeln wie beispielsweise Schmutz, Staub, Ruß, industrielle Pulver, Blütenstaub, Sporen, Bakterien oder Viren führt zur Kontamination der Oberflächen und ist in vielen Fällen unerwünscht.

Ein weiteres Problem, das durch die Bildung von Ablagerungen entsteht, ist darin begründet, dass insbesondere in Belägen in Polymerisationsreaktoren die molekularen Parameter wie Molekulargewicht oder Vernetzungsgrad deutlich von den Produktspezifikationen abweichen. Wenn sich Ablagerungen während des laufenden Betriebs lösen, können sie das Produkt verunreinigen (z.B. Stippen in Lacken, Einschlüsse in Suspensionsperlen). Unerwünschte Ablagerungen können im Falle von Reaktorwandungen, Füllkörpern oder Mischorganen weiterhin zu einer unerwünschten Veränderung des Verweilzeitprofils der Apparatur führen oder die Wirksamkeit der Einbauten oder Mischorgane als solche beeinträchtigen. Abbrechende grobe Teile von Belägen können zum Verstopfen von Austrags- und Aufarbeitungsvorrichtungen führen, kleine Teile können zu Beeinträchtigungen des produzierten Produktes führen.

Bei den Ablagerungen, deren Bildung verhindert werden soll, handelt es sich um Beläge, die beispielsweise durch Reaktionen mit und auf Oberflächen verursacht werden kann. Weitere Gründe sind die Adhäsion an Oberflächen, die durch van-der-Waals-Kräfte, Polarisierungseffekte oder elektrostatische Doppelschichten verursacht werden kann. Wichtige Effekte sind weiterhin Stagnation der Bewegung an der Oberfläche und gegebenenfalls Reaktionen in den genannten stagnierenden Schichten. Schließlich sind zu nennen: Niederschläge aus Lösungen, Verdampfungsrückstände, Vercrackung an lokal heißen Oberflächen sowie mikrobiologische Aktivitäten.

Die Ursachen sind abhängig von den jeweiligen Stoffkombinationen und können alleine oder in Kombination wirksam werden. Während die Vorgänge, wegen derer die unerwünschten Beläge entstehen, recht gut untersucht sind (z.B. A.P. Watkinson und D.I. Wilson, *Experimental Thermal Fluid Sci.* 1997, 14, 361 und darin zitierte Literatur), gibt es nur wenig einheitliche Konzepte zur Verhinderung der oben beschriebenen Ablagerungen. Die bisher bekannten Verfahren haben technische Nachteile.

Mechanische Lösungen haben den Nachteil, dass sie erhebliche Mehrkosten verursachen können. Zusätzliche Reaktoreinbauten können weiterhin das Strömungsprofil von Fluiden in den Reaktoren deutlich verändern und dadurch eine teure Neuentwicklung des Verfahrens erforderlich machen. Chemische Additive können zu einer unerwünschten Kontamination des Produktes führen; einige Additive belasten die Umwelt.

Aus diesen Gründen wird verstärkt nach Möglichkeiten gesucht, die Fouling-Neigung durch Modifizierung von Apparaten und Apparateteilen für den chemischen Anlagenbau direkt zu senken.

WO 00/40775, WO 00/40774 und WO 00/40773 beschreiben Verfahren zur Beschichtung von Oberflächen, speziell Oberflächen von Reaktoren für die Hochdruckpolymerisation von 1-Olefinen bzw. Oberflächen von Wärmetauschern, durch stromloses Abscheiden einer NiP/Polytetrafluorethylen-Schicht oder einer CuP/Polytetrafluorethylen-Schicht, durch das die betreffenden Metalloberflächen antihaftend modifiziert werden können. Beim Einsatz der nach dem beschriebenen Verfahren beschichteten Oberflächen in Apparaten und Apparateteilen für den chemischen Anlagenbau, speziell Reaktoren für die Hochdruckpolymerisation von 1-Olefinen, wird jedoch beobachtet, dass die Flächen nicht ausreichend mechanisch stabil sind, so dass nach einer längeren Anwendung wiederum Anbackungen von Produkt beobachtet werden. Eine erneute Beschichtung einer nur teilweise abgetragenen NiP/Polytetrafluorethylen-Schicht gelingt jedoch nicht. Weiterhin ist zu beobachten, dass eine einmal abgeschiedene NiP/Polytetrafluorethylen-Schicht nur schlecht wieder entfernt werden kann, wenn sie in einem Reaktor oder Apparateteil nicht mehr erwünscht ist. Insbesondere in Reaktoren mit raschem Produktwechsel, in denen gelegentlich auch Reaktionen bei über 400°C durchgeführt werden sollen, hat sich eine Beschichtung mit NiP/Polytetrafluorethylen nicht bewährt. Schließlich ist als Nachteil zu nennen, dass insbesondere bei der Beschichtung großvolumiger Reaktoren große Mengen an Tauchbädern verwendet werden müssen, die zu beträchtlichen Lösemittelabfällen führen.

WO 96/04123 offenbart selbstreinigende Oberflächen, die mit Polytetrafluorethylen überzogen werden können und besonders hydrophobe Eigenschaften haben. Die Strukturierung wird durch Anätzen oder Prägen der Oberfläche erreicht, durch physikalische Methoden wie Sandstrahlen oder Ionenätzung mit beispielsweise Sauerstoff. Der Abstand der Erhebungen bzw. Vertiefungen beträgt mehr als 5 µm. Anschließend wird die Oberfläche mit Teflon beschichtet. Die mechanische Stabilität derartig hydrophobierter Schichten ist jedoch viel zu gering für eine Verwendung im chemischen Apparatebau, insbesondere für Polymerisationsreaktoren, in denen starke Scherkräfte wirken. Die so aufgebrachten Schichten sind außerdem für zahlreiche Anwendungen nicht transparent genug.

Weiterhin sind strukturierte Oberflächen mit hydrophoben Eigenschaften bekannt (EP-A 0 933 388), die so hergestellt werden, dass man die betreffende Oberfläche beispielsweise anätzt, dadurch Erhebungen oder Rillen im Abstand von weniger als 10 µm auf der Oberfläche herstellt und anschließend mit einer Schicht eines hydrophoben Polymers, beispielsweise Polyvinylidenfluorid, überzieht, wobei die Oberflächenenergie des entsprechenden Materials weniger als 20 mN/m beträgt. Diese Schichten können weiterhin fluorierte Wachse, beispielsweise Hostaflone^{®}, enthalten. Die derart modifizierten Oberflächen sind hydrophob und oleophob. Als Anwendungen sind Halterungen von Wafern in der Halbleiterproduktion genannt, weiterhin die Herstellung oder Beschichtung von Scheinwerfern, Windschutzscheiben oder Abdeckungen von Solarzellen. Nachteilig an dem Verfahren ist jedoch, dass die Strukturierung nach partiellem mechanischem Abbau nur noch schwer zu erneuern ist.

Es bestand also die Aufgabe, ein Verfahren zur schmutzabweisenden Ausrüstung von Oberflächen bereitzustellen, das die im Stand der Technik genannten Nachteile vermeidet.

Demgemäß wurden das eingangs definierte Verfahren gefunden.

Die Komponenten sind dabei wie folgt definiert:

A ist ein mit Wasser gut quellbarer Stoff, beispielsweise ein Gel. Seine Wasseraufnahme bei 20°C beträgt mehr als 10 Gew.-%, bevorzugt mehr als 20 Gew.-%, gemessen nach ISO 8361.

Zweckmäßig wählt man Komponente A aus einem oder mehreren organischen Polymeren und Copolymeren aus, wobei die Polymere linear, kammartig, sternartig (sogenannte Dendrimere), verzweigt, hyperverzweigt oder vernetzt aufgebaut sein können. Zweckmäßig gewählte Copolymere sind beispielsweise statistisch, alternierend, blockartig, insbesondere gepfropft, linear, verzweigt, sternartig (sogenannte Dendrimere), hyperverzweigt oder vernetzt aufgebaut.

Bevorzugt besteht A aus einem oder mehreren Polymeren oder Copolymeren, die Stickstoff- oder Sauerstoffatome enthalten, besonders bevorzugt aus solchen Polymeren, die Stickstoff- und Sauerstoffatome enthalten. Dabei ist es möglich, dass sich die Stickstoff- bzw. Sauerstoffatome in der Haupt- oder Seitenkette der betreffenden Polymere befinden. Besonders bevorzugt beträgt das molare Verhältnis der Summe aus Stickstoffatomen und Sauerstoffatomen zu den Kohlenstoffatomen 2:1 bis 1:5, insbesondere 3:2 bis 1:3.

Wählt man Komponente A aus blockartig aufgebauten Copolymeren (z.B. Blockcopolymere und insbesondere Pfropfcopolymere), so weist mindestens ein Block ein molares Verhältnis der Summe aus Stickstoffatomen und Sauerstoffatomen zu den Kohlenstoffatomen 2:1 bis 1:5, insbesondere 3:2 bis 1:3 auf.

Die als Komponente A geeigneten Polymere weisen Grundstrukturen aus den Elementen 1 bis 4 auf 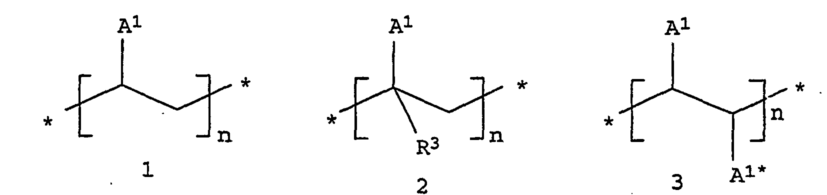 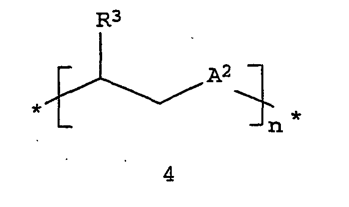 wo auch solche Polymere als Komponente A geeignet sind, die mehrere verschiedene Elemente 1 bis 3 aufweisen.

Beispiele für als Komponente A geeignete Polymere sind Polymere mit folgenden polaren Strukturelementen A¹ und A^{1*}
-SO₃H, -SO₃ - X⁺, -PO₃H₂, -PO₃²⁻ 2 X⁺, -O-PO₃H₂, -COOH, -COOR¹, -COO⁻ X⁺,
-C(O)NR¹R², -O-C(O)NR¹R²,
-OH, -OCH₃,

In der Kette der als Komponente A geeigneten Polymere können sich beispielsweise die folgenden Strukturelemente A² befinden:
-O- , -C(O)O- , -O-C(O)O- , -NR1-C(O)NR²- -O-C (O) NR¹-, -CH₂CH₂O- , -C (O) NR¹C (O)- ,
-O-C(O)NR¹C(O)-, -O-C(O)NR¹C(O)-O-, -C (O)NR¹C (O)NR²-,
-O-C(O) NR¹C (O) NR²-,
-O-C(O)NR¹C (O)-O- ,
X steht für Li, Na, K, Rb, Cs oder Ammoniumionen der Formel

N(R³)₄;

R¹ bis R² sind jeweils gleich oder verschieden und stehen für H, C₁-C₄-Alkyl, gewählt aus Methyl, Ethyl, n-Propyl, iso-Propyl, n-Butyl, iso-Butyl, sec.-Butyl und tert.-Butyl;
n ist eine ganze Zahl im Bereich von 8 bis 80 000.
R³ sind jeweils gleich oder verschieden und ausgewählt aus
Wasserstoff;
C₁-C₄-Alkyl, gewählt aus Methyl, Ethyl, n-Propyl, iso-Propyl, n-Butyl, iso-Butyl, sec.-Butyl und tert.-Butyl;
-CH₂-CH₂-OH
Benzyl oder C₆-C₁₄-Aryl, bevorzugt Phenyl.

Beispielhaft seien die folgenden Ammoniumionen genannt:
NH₄⁺, CH₃NH₃⁺, (CH₃)₂NH₂⁺, (CH₃)₃NH⁺, (CH₃)₄N⁺, C₂H₅NH₃⁺,
H₂N(CH₂CH₂OH)₂⁺, HN(CH₂CH₂OH)₃⁺, CH₃NH(CH₂CH₂OH)₂⁺,
n-C₄H₉NH(CH₂CH₂OH)₂⁺.

Weitere Vorteilhafte polare Elemente A¹ bzw. A^{1*} sind die einfach an die Polymerkette gebundenen Elemente 5 bis 13

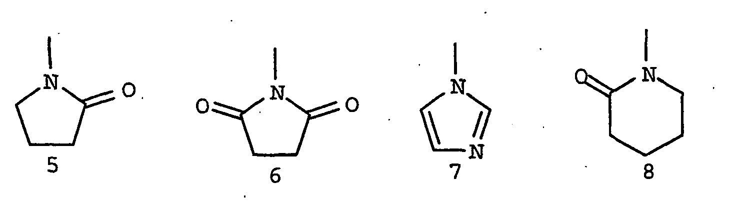

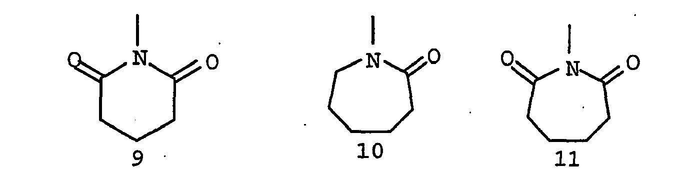

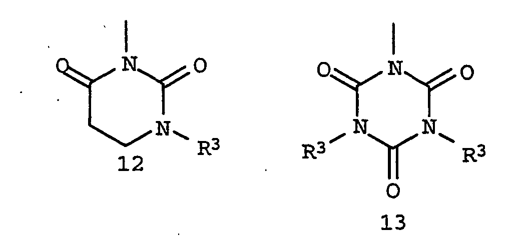

Die Elemente 5 bis 13 können dabei in der Polymerhauptkette bzw. Copolymerhauptkette oder - so es sich beispielsweise um ein verzweigtes oder vernetztes Polymer oder Copolymer handelt - in den Polymerseitenketten sein.

Die Elemente 5 bis 13 können über das Polymermolekül gleichmäßig, d.h. statistisch oder alternierend, verteilt sein oder ungleichmäßig, wie das zum Beispiel bei Blockcopolymeren und insbesondere bei Propfcopolymeren der Fall ist.

Die erfindungsgemäß in der Komponente A befindlichen Polymere bzw. Copolymere können als Strukturelemente A¹ bzw. A^{1*} die an die Polymerkette gebundenen Elemente 1a oder 2a 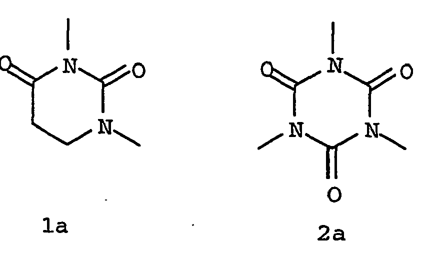 enthalten, wobei sie über diese Elemente vorzugsweise verzweigte oder vernetzte Strukturen bilden.

Die Elemente 1a - 2a können dabei in der Polymerhauptkette bzw. Copolymerhauptkette oder - so es sich beispielsweise um ein verzweigtes oder vernetztes Polymer oder Copolymer handelt - in den Polymerseitenketten sein.

Die Elemente 1a - 2a können über das Polymermolekül gleichmäßig, d.h. statistisch oder alternierend verteilt sein oder ungleichmä-ßig, wie das zum Beispiel bei Blockcopolymeren der Fall ist.

Bevorzugt sind weiterhin bei pH-Werten von 3 bis 12 nicht ionisierbare polare Strukturelemente, beispielsweise Polyurethaneinheiten, Polyethylenglykoleinheiten, Polyvinylpyrrolidoneinheiten, Polyvinylformamideinheiten, Polyvinylalkoholeinheiten oder Polysaccharideinheiten.

Wenn die Komponente A aus mehreren Polymeren besteht, so sind solche Polymere bevorzugt, die untereinander Komplexe bilden. Beispiele dafür sind die Kombinationen Poly(meth)acrylsäure/Polyethylenoxid, Poly(meth)acrylsäure/Polyvinylpyrrolidon und Poly(meth)acrylsäure/Polyvinylformamid.

Die erfindungsgemäß in der Komponente A befindlichen Polymere bzw. Copolymere haben zweckmäßig ein Molekulargewicht Mₙ von 1.000 bis 10.000.000 g/mol, vorzugsweise Mₙ von 5.000 bis 2.000.000 g/mol und eine Polydispersität von 1,1 bis 10, vorzugsweise von 1,5 bis 7, bestimmt durch Gelpermeationschromatographie.

Als Komponente B enthalten die Compositmaterialien einen Stoff, der eine poröse Struktur bildet oder vorgegeben hat. Vorzugsweise ist B mit Flüssigkeiten, insbesondere Wasser, wenig quellbar. Dazu gehören im Rahmen der vorliegenden Erfindung auch solche Stoffe, die eine partikuläre Struktur aufweisen. Gleichfalls werden im Rahmen der vorliegenden Erfindungen solche Stoffe als eine poröse Struktur bildend definiert, die eine poröse Struktur bereits aufweisen. Wenig quellbar im Sinne der vorliegenden Erfindung bedeutet insbesondere, dass die Flüssigkeitsaufnahme und insbesondere die Wasseraufnahme bei 20°C weniger als 10 Gew.-% beträgt, gemessen nach ISO 8361.

B gibt dem Compositmaterial mechanische Festigkeit und bildet Poren, in die A eingelagert wird.

Dabei besteht B aus festen Partikeln, die zusammen mit A und optional einem Bindemittel C eine poröse Struktur bilden.

Beispiele sind pyrogene Kieselsäure, pyrogenes Titandioxid, pyrogenes Aluminiumoxid, Nanoteilchen, z.B. kolloidales Kieselgel (Ludox^{®}), kolloidales Aluminiumoxid, Kieselgur (Diatomeenerde); anorganische Pulver beispielsweise aus unlöslichen Silikaten, Phosphaten, Carbonaten, Sulfaten oder Carbiden; Quarz, Aluminiumoxid oder Böhmit; natürliche oder künstliche Fasern aus Wolle, Baumwolle, Hanf, Polyester, Polyamiden oder Polypropylen; Polymerpulver, z.B. isotaktisches Polypropylen, aktaktisches oder syndiotaktisches Polystyrol, Polyethylen wie beispielsweise HDPE oder LDPE, mikronisierte Wachse wie beispielsweise Polyethylenwachse oder Polypropylenwachse oder Paraffinwachse.

In einer bevorzugten Ausführungsform der vorliegenden Erfindung beträgt das Volumenverhältnis von A zu dem Porenvolumen von B im gequollenen Zustand 1:100 bis 10:1, besonders bevorzugt 1:10 bis 7:1.

Die Poren von B können verschieden geformt sein. Der Porendurchmesser beträgt üblicherweise 0,001 µm bis 500 µm; bevorzugt 0,01 µm bis 100 µm. Die Porentiefe beträgt üblicherweise 0,001 µm bis 500 µm, bevorzugt 0,01 µm bis 100 µm.

Porenvolumen, Porendurchmesser und Porentiefe werden durch gängige Messmethoden bestimmt, beispielsweise Stickstoff-Adsorption nach BET oder Quecksilberporosimetrie.

B ist ein partikulärer Stoff. Der Partikeldurchmesser von B beträgt üblicherweise 0,001 µm bis 500 µm, bevorzugt 0,05 µm bis 10 µm.

In einer besonderen Ausführungsform der vorliegenden Erfindung werden den Compositmaterialien Bindemittel C zugesetzt. C sind von A und B verschiedene Bindemittel, welche die Festigkeit des Compositmaterials erhöhen. Beispiele sind kommerziell erhältliche Polymere z.B. Polyvinylchlorid, ataktisches oder syndiotaktisches Polystyrol, isotaktisches Polypropylen, Polyethylen wie beispielsweise HDPE oder LDPE, Polymethylmethacrylat, Polyisobuten oder Polyurethan. Weitere Beispiele sind anorganische Bindemittel wie z.B. Wasserglas, Kieselsole, kolloidales SiO₂. Die Gewichtsverhältnisse von B zu C sind im Allgemeinen unkritisch und betragen 10:99 bis 95:5, bevorzugt 30:70 bis 90:10.

Gegenstand der vorliegenden Erfindung ist, wie bereit erwähnt, ein Verfahren zur Beschichtung von Substraten unter Verwendung der vorstehend beschriebenen Compositmaterialien. Zu den erfindungsgemäßen Verfahren zählen auch solche Ausgestaltungsformen des Verfahrens, bei denen man ein poröses Substrat mit dem mit Wasser gut quellbaren Stoff beschichtet und der Stoff in die oberste Schicht des Substrats eindringt.

Erfindungsgemäß bringt man die vorstehend beschriebenen Compositmaterialien in flüssiger Formulierung auf die Oberflächen auf, beispielsweise durch Aufsprühen, Tauchen oder Walzenauftrag oder durch das Foulardverfahren.

Es ist vorteilhaft, zur Herstellung der erfindungsgemäßen Oberflächen nach dem Aufbringen der erfindungsgemäßen Compositmaterialien einen Fixierschritt anzuschließen, beispielsweise thermisch bei 80 bis 250°C, bevorzugt 100 bis 210°C und über eine Dauer von 10 Minuten bis 24 Stunden. Es ist ach möglich, die Fixierung durch Zugabe eines Vernetzers beim Aufbringen der erfindungsgemäßen Compositmaterialien zu verstärken. Geeignete Vernetzer sind beispielsweise Radikalbildner, die thermisch oder durch UV-Belichtung aktiviert werden.

Durch Anwendung des erfindungsgemäßer Verfahrens erhält man Oberflächen von Substraten, die eine Beschichtung aus den erfindungsgemäßen verwendeten Compositmaterialien aufweisen. Die so erhältlichen Oberflächen zeichnen sich durch große Hydrophilie aus und insbesondere dadurch, dass Wasser auf den Oberflächen keine Tropfen bildet. Ferner sind die so erhältlichen Oberflächen leicht von anorganischem und organischem Schmutz zu reinigen. Als Substrate können verschiedenste anorganische oder organische Materialien beschichtet werden. Beispiele sind anorganische Materialien wie beispielsweise Sandstein, Beton, Ton, Sanitärkeramik, Metalle und Legierungen wie beispielsweise Stahl, Schäume aus Hart-Polyurethan, weiterhin Gläser, textile Gewebe, Vliesstoffe, Leder, Holz, Papier, Polymermembranen.

Die Erfindung wird durch Arbeitsbeispiele erläutert.

### Beispiele

### 1. Herstellung von Compositmaterialien

### 1.1. Glas und Polyvinylpyrrolidon

Eine poröse Glasscheibe, kommerziell erhältlich bei ROBU Glasfiltergeräte GmbH, mit einem Durchmesser von 4 cm und einer Dicke von 0,4 cm und mit Porenweiten von 1 bis 1,6 µm wird in eine Lösung von 5 g Polyvinylpyrrolidon mit einem K-Wert von 30 (kommerziell erhältlich von Aldrich) in 95 g VE-Wasser getaucht und 10 min auf 98°C erwärmt. Nach dem Abkühlen wird die Glasscheibe aus der Lösung entfernt und bei 20°C über einen Zeitraum von 17 h getrocknet.

Dann wird die Glasscheibe bei 200 °C über einen Zeitraum von 3 Stunden getempert.

Auf die behandelte Glasplatte werden Wassertropfen aufgebracht. Die behandelte Glasplatte wird von Wasser sehr gut benetzt. Es bilden sich keine Tropfen auf der Glasplatte.

### 1.2. Glas und Polyethylenglykol

Eine poröse Glasscheibe, kommerziell erhältlich bei ROBU Glasfiltergeräte GmbH, mit einem Durchmesser von 4 cm und einer Dicke von 0,4 cm und mit Porenweiten von 1 bis 1,6 µm wird in eine Lösung von 5 g Polyethylenglykol (Molekulargewicht Mₙ = 4600 g/mol ; Aldrich) in 95 g vollentsalztem Wasser getaucht und 10 min auf 98°C erwärmt. Nach dem Abkühlen wird die Glasscheibe aus der Lösung entfernt und bei 20°C über einen Zeitraum von 17 h getrocknet.

Dann wird die Glasscheibe bei 175°C über einen Zeitraum von 3 h getempert.

Auf die behandelte Glasplatte werden Wassertropfen aufgebracht. Die behandelte Glasplatte wird von Wasser sehr gut benetzt. Es bilden sich keine Tropfen auf der Glasplatte.

### 1.3.Glas und Polyacrylsäure

Eine poröse Glasscheibe, kommerziell erhältlich bei ROBU Glasfiltergeräte GmbH, mit einem Durchmesser von 4 cm und einer Dicke von 0,4 cm und mit Porenweiten von 1 bis 1,6 µm wird in eine Lösung von 5 g Polyacrylsäure (Molekulargewicht M_{w} = 250.000 g/mol ; Aldrich) in 95 g vollentsalztem Wasser getaucht und 10 min auf 98°C erwärmt. Nach dem Abkühlen wird die Glasscheibe aus der Lösung entfernt und bei 20°C über einen Zeitraum von 17 h getrocknet.

Dann wird die Glasscheibe bei 175°C über einen Zeitraum von 3 h getempert.

Auf die behandelte Glasplatte werden Wassertropfen aufgebracht. Die behandelte Glasplatte wird von Wasser sehr gut benetzt. Es bilden sich keine Tropfen auf der Glasplatte.

### 1.4.Glas und Polyethylenoxid und Polyacrylsäure

Eine poröse Glasscheibe, kommerziell erhältlich bei ROBU Glasfiltergeräte GmbH, mit einem Durchmesser von 4 cm und einer Dicke von 0,4 cm und mit Porenweiten von 1 bis 1,6 µm wird in eine Lösung von 2,5 g Polyacrylsäure (Molekulargewicht M_{w} = 250.000 g/mol ; Aldrich) und 2,5 g Polyethylenglykol (Molekulargewicht Mₙ = 4600 g/mol ; Aldrich) in 95 g vollentsalztem Wasser getaucht und 10 min auf 98°C erwärmt. Nach dem Abkühlen wird die Glasscheibe aus der Lösung entfernt und bei 20°C über einen Zeitraum von 17 h getrocknet.

Dann wird die Glasscheibe bei 175°C über einen Zeitraum von 3 h getempert.

Auf die behandelte Glasplatte werden Wassertropfen aufgebracht. Die behandelte Glasplatte wird von Wasser sehr gut benetzt. Es bilden sich keine Tropfen auf der Glasplatte.

### 2. Test der Schmutzentfernung

### 2.1. Entfernung von anorganischem Schmutz - allgemeine Vorgehensweise

Die behandelten Glasplatten der Beispiele 1-4 werden mit Magnetit-Pulver (Teilchengröße < 5 µm ; Fa. Aldrich) beschmutzt und anschließend unter fließendem Wasser abgespült.

Das Magnetit-Pulver wird deutlich schneller und zu einem größeren Prozentsatz entfernt als bei einem Vergleichsexperiment mit einer unbehandelten Glasplatte.

### 2.2. Entfernung von organischem Schmutz - allgemeine Vorgehensweise

Die behandelten Glasplatten der Beispiele 1-4 werden mit Ruß-Pulver (Printex^{®} V; Degussa AG) beschmutzt und anschließend unter fließendem Wasser abgespült.

Das Ruß-Pulver wird deutlich schneller und zu einem größeren Prozentsatz entfernt als bei einem Vergleichsexperiment mit einer unbehandelten Glasplatte.

Die Schmutzentfernung ist bei den Glasplatten, die mit Polymeren, welche bei pH-Werten von 3-12 nicht ionisierbare polare Strukturelemente aufweisen, behandelt sind (Beispiele 1, 2 und 4) qualitativ besser als bei der mit Polyacrylsäure behandelten Glasplatte, welche bei pH > 7 ionisierbar ist (Beispiel 3).

## Patentansprüche

1. Verfahren zur hydrophilen Ausrüstung von Oberflächen unter Verwendung von hydrophilen Compositmaterialien, enthaltend die Komponenten A, B sowie optional C, wobei
A ein mit Wasser gut quellbarer Stoff ist,
B ein partikulärer Stoff mit einem Partikeldurchmesser von 0,001 µm bis 500 µm ist, der eine poröse Struktur bildet und in deren Poren sich A befindet, wobei der Porendurchmesser 0,001 µm bis 500 µm und die Porentiefe 0,001 µm bis 500 µm betragen, und
C ein Bindemittel ist,
wobei man das Compositmaterial in flüssiger Formulierung auf die betreffenden Oberflächen aufbringt.

2. Verfahren nach Anspruch 1, **dadurch gekennzeichnet, dass** A ein Gel ist.

3. Verfahren nach Anspruch 1 oder 2, **dadurch gekennzeichnet, dass** es sich bei B um ein anorganisches partikuläres Material handelt.

4. Verfahren nach einem der vorangegangenen Ansprüche, **dadurch gekennzeichnet, dass** die Porendurchmesser von B 0,01 bis 100 µm und die Porentiefe 0,01 bis 100 µm betragen.

5. Verfahren nach einem der vorangegangenen Ansprüche, **dadurch gekennzeichnet, dass** die Wasseraufnahme von A bei 20°C mehr als 10 Gew.-% beträgt.

6. Verfahren nach einem der vorangegangenen Ansprüche, **dadurch gekennzeichnet, dass** A aus einem oder mehreren organischen Polymeren oder Copolymeren besteht.

7. Verfahren nach einem der vorangehenden Ansprüche, **dadurch gekennzeichnet, dass** Komponente A bei pH-Werten von 3 bis 12 nicht ionisierbare polare Strukturelemente enthält.

8. Verfahren nach einem der vorangehenden Ansprüche, **dadurch gekennzeichnet** bei pH-Werten von 3 bis 12 nicht ionisierbare Strukturelemente gewählt werden aus Polyurethaneinheiten, Polyethylenglykoleinheiten, Polyvinylpyrrolidoneinheiten, Polyvinylformamideinheiten, Polyvinylalkoholeinheiten oder Polysaccharideinheiten.

9. Verfahren nach einem der vorangegangenen Ansprüche, **dadurch gekennzeichnet, dass** A aus mehreren organischen Polymeren oder Copolymeren besteht, die untereinander Polymerkomplexe bilden.

10. Verfahren nach einem der vorangegangenen Ansprüche, **dadurch gekennzeichnet, dass** A aus einem oder mehreren Polymeren oder Copolymeren besteht, die Stickstoff- oder Sauerstoffatome enthalten.

11. Verfahren nach einem der vorangegangenen Ansprüche, **dadurch gekennzeichnet, dass** A aus einem oder mehreren Polymeren oder Copolymeren besteht, die Stickstoff- oder Sauerstoffatome enthalten, wobei das molare Verhältnis der Summe aus Stickstoffatomen und Sauerstoffatomen zu den Kohlenstoffatomen 2:1 bis 1:5 beträgt.

12. Verfahren nach einem der vorangegangenen Ansprüche, **dadurch gekennzeichnet, dass** B ein wenig quellbarer Stoff ist, dessen Wasseraufnahme bei 20°C weniger als 10 Gew.-% beträgt.

13. Verfahren nach einem der vorangehenden Ansprüche, **dadurch gekennzeichnet, dass** das Volumenverhältnis von A zum Porenvolumen von B im Bereich von 1:100 bis 10:1 liegt.

14. Verfahren nach einem der vorangehenden Ansprüche, **dadurch gekennzeichnet, dass** man die flüssige Formulierung durch Aufsprühen, Tauchen oder Walzenauftrag oder durch das Foulardverfahren aufbringt.

## Claims

1. A process for giving surfaces hydrophilic properties using hydrophilic composite materials comprising components A and B, and also optionally C, where
A is a substance which readily swells with water,
B is a particular substance with a particle diameter of from 0.001 µm to 500 µm which forms a porous structure and in whose pores A is present, the pore diameter being from 0.001 µm to 500 µm and the pore depth being from 0.001 µm to 500 µm and
C is a binder,
where the composite material is applied in a liquid formulation to the surfaces in question.

2. The process according to claim 1, wherein A is a gel.

3. The process according to claim 1 or 2, wherein B is an inorganic particulate material.

4. The process according to any of the preceding claims, wherein the pore diameter of B is from 0.01 to 100 µm and the pore depth is from 0.01 to 100 µm.

5. The process according to any of the preceding claims, wherein the water absorption of A at 20°C is more than 10% by weight.

6. The process according to any of the preceding claims, wherein A is composed of one or more organic polymers or copolymers.

7. The process according to any of the preceding claims, wherein component A comprises polar structural elements which are non-ionizable at pH values of from 3 to 12.

8. The process according to any of the preceding claims, wherein polar structural elements which are non-ionizable at pH values of from 3 to 12 are chosen from polyurethane units, polyethylene glycol units, polyvinylpyrrolidone units, polyvinylformamide units, polyvinyl alcohol units, or polysaccharide units.

9. The process according to any of the preceding claims, wherein A is composed of two or more organic polymers or copolymers which form polymer complexes with one another.

10. The process according to any of the preceding claims, wherein A is composed of one or more polymers or copolymers which comprise nitrogen atoms or comprise oxygen atoms.

11. The process according to any of the preceding claims, wherein A is composed of one or more polymers or copolymers which comprise nitrogen atoms or comprise oxygen atoms, where the molar ratio of the total number of nitrogen atoms and oxygen atoms to that of carbon atoms is from 2:1 to 1:5.

12. The process according to any of the preceding claims, wherein B is a low-swellability substance whose water absorption at 20°C is below 10% by weight.

13. The process according to any of the preceding claims, wherein the ratio of the volume of A to the pore volume of B is in the range from 1:100 to 10:1.

14. The process according to any of the preceding claims, wherein the liquid formulation is applied by spray application, dip coating, or roll application, or by the padding process.

## Revendications

1. Procédé de finissage hydrophile de surfaces par utilisation de matériaux composites hydrophiles contenant les composants A, B ainsi qu'éventuellement C, dans lequel
A est une matière qui est susceptible de bien gonfler avec de l'eau,
B est une matière particulaire présentant un diamètre de particule de 0,001 µm à 500 µm, qui forme une structure poreuse et dans les pores de laquelle se trouve A, le diamètre de pore étant de 0,001 µm à 500 µm et la profondeur de pore de 0,001 µm à 500 µm, et
C est un liant,
le matériau composite étant appliqué dans une formulation liquide sur les surfaces concernées.

2. Procédé suivant la revendication 1, **caractérisé en ce que** A est un gel.

3. Procédé suivant la revendication 1 ou 2, **caractérisé en ce que**, pour ce qui concerne B, il s'agit d'une matière particulaire inorganique.

4. Procédé suivant l'une des revendications précédentes, **caractérisé en ce que** le diamètre de pore de B est de 0,01 à 100 µm et la profondeur de pore de 0,01 à 100 µm.

5. Procédé suivant l'une des revendications précédentes, **caractérisé en ce que** l'absorption d'eau de A à 20°C est supérieure à 10 % en poids.

6. Procédé suivant l'une des revendications précédentes, **caractérisé en ce que** A est constitué d'un ou de plusieurs polymères ou copolymères organiques.

7. Procédé suivant l'une des revendications précédentes, **caractérisé en ce que** le composant A contient, à des valeurs de pH de 3 à 12, des éléments structurels polaires non ionisables.

8. Procédé suivant l'une des revendications précédentes, **caractérisé en ce que**, à des valeurs de pH de 3 à 12, des éléments structurels non ionisables sont choisis parmi des unités de polyuréthanne, des unités de polyéthylèneglycol, des unités de polyvinylpyrrolidone, des unités de polyvinylformamide, des unités d'alcool polyvinylique ou des unités de polysaccharide.

9. Procédé suivant l'une des revendications précédentes, **caractérisé en ce que** A est constitué de plusieurs polymères ou copolymères organiques qui forment entre eux des complexes polymères.

10. Procédé suivant l'une des revendications précédentes, **caractérisé en ce que** A est constitué d'un ou de plusieurs polymères ou copolymères qui contiennent des atomes d'azote ou d'oxygène.

11. Procédé suivant l'une des revendications précédentes, **caractérisé en ce que** A est constitué d'un ou de plusieurs polymères ou copolymères qui contiennent des atomes d'azote ou d'oxygène, le rapport molaire entre la somme des atomes d'azote et des atomes d'oxygène et les atomes de carbone étant de 2/1 à 1/5.

12. Procédé suivant l'une des revendications précédentes, **caractérisé en ce que** B est une matière peu susceptible de gonfler, dont l'absorption d'eau est inférieure à 10 % en poids à 20°C.

13. Procédé suivant l'une des revendications précédentes, **caractérisé en ce que** le rapport volumique entre A et le volume poreux de B est de l'ordre de 1/100 à 10/1.

14. Procédé suivant l'une des revendications précédentes, **caractérisé en ce qu'**on applique la formulation liquide par pulvérisation, immersion ou application au rouleau ou par le procédé de foulardage.
